# EUROPÄISCHE PATENTANMELDUNG

(11) **EP 1 324 218 A1**
(43) Veröffentlichungstag der Anmeldung: **02.07.2003**
(21) Anmeldenummer: 01811209.4
(22) Anmeldetag: 11.12.2001
(51) Int. Cl.: G06F 17/30

(54) **Kategorisierungsystem für Datenobjekte und Verfahren zum Prüfen der Konsistenz von Zuordnungen von Datenobjekten zu Kategorien**

(71) Anmelder: ABB RESEARCH LTD., 8050 Zürich (CH)
(72) Erfinder: Gelle, Esther, 8965 Berikon (CH); Karhu, Katja, 5405 Baden (CH); Le, Julien, 1008 Prilly (CH); Riffel, Michael, 76709 Kronau (DE); Schepik, Viktor, 73579 Schechingen (DE)
(74) Vertreter: ABB Patent Attorneys

(57) **Zusammenfassung**

Die Erfindung ist gerichtet auf ein Kategorisierungsssystem; aufweisend ein Interaktionsmittel (1) zur Eingabe von Zuordnungen von Datenobjekten zu Kategorien; eine Datenbank (2), speichernd zumindest eine Konsistenzbedingungsregel zum Bestimmen von Konsequenzen bezüglich Zuordnungen von Datenobjekten zu Kategorien als Folge einer von einem Benutzer eingegebenen Zuordnung eines Datenobjekts zu einer Kategorie; und ein Konsistenzprüfmittel (3) zur Prüfung der Konsistenz von eingegebenen Zuordnungen mit der zumindest einen Konsistenzbedingungsregel in der Datenbank (2).

## Beschreibung

### Technisches Gebiet

Die vorliegende Erfindung ist gerichtet auf ein Kategorisierungssystem mit einer Konsistenzprüfung von Kategorien zugeordneten Datenobjekten, sowie ein Verfahren zum Prüfen der Konsistenz von Zuordnungen von Datenobjekten zu Kategorien (einer speziellen Art von Datenobjekten).

### Stand der Technik

Mit den exponentiell anwachsenden Datenbeständen in Datenverarbeitungsanlagen, wie beispielsweise Intranet, Extranet oder dem gesamten Internet wird das Auffinden von Informationen immer schwieriger und aufwendiger. Daher ist man dazu übergegangen, Datenobjekte wie Dokumente, Bilder, Multimediadaten etc., beziehungsweise Verknüpfungen auf diese Datenobjekte in zumeist hierarchisch gegliederten Kategorisierungssystemen zu referenzieren. Einige der größeren am Markt befindlichen Internet-Suchmaschinen sowie spezielle Portalsites weisen solche Kategorisierungssysteme auf. Sie ermöglichen dem Anwender, der zu einem bestimmten Thema beziehungsweise Gebiet eine Information sucht, das schnelle Auffinden geeigneter Datenobjekte an Hand von Kategorien. Derartige Kategorisierungen, Klassifizierungen oder Katalogisierungen werden zumeist durch menschliches Personal durchgeführt, obwohl bereits erste Ansätze zu einer automatisierten Kategorisierung existieren, welche beispielsweise durch das Auffinden bestimmter Schlüsselworte oder deren Gruppierung in einem Text oder das Auffinden bestimmter graphischer Elemente in graphischen Multimediadaten erfolgt. Hierbei stellt sich dem Kategorisierer häufig die Aufgabe, ein gefundenes Datenobjekt mehreren verschiedenen Kategorien zuzuweisen, da es für alle diese Kategorien als geeigneter Eintrag erscheint.

Andererseits kann es vorkommen, daß Datenobjekte, die einer bestimmten Kategorie zugeordnet worden sind, aus Gründen des Vermeidens einer Redundanz, in bestimmten anderen Kategorien nicht mehr eingetragen werden sollen. Eine einfache Automatisierung dieses Vorgangs dergestalt daß, falls der Kategorisierer ein bestimmtes Datenobjekt einer Kategorie zuordnet, automatisch die weiteren notwendigen Kategorien ebenfalls dem Datenobjekt zugeordnet werden, greift zu kurz, da durch die ständige Möglichkeit des Eingriffs eines menschlichen Operators die geplante Anordnung wiederum aufgehoben werden kann, so daß das für sinnvoll erachtete Konzept der Kategorisierung nicht durchgängig eingehalten wird.

Es wäre daher unabhängig von Eingaben eines Anwenders sinnvoll, ein Überprüfungssystem bereitzustellen, welches dynamisch feststellen kann, ob die vom Benutzer angewendeten Kategorien mit einem vorgegebenen Regelwerk konsistent sind um gegebenenfalls, in welcher Weise auch immer, korrigierend einzugreifen.

Das Überprüfen der Konsistenz diskreter Daten wird hierbei zum Beispiel durch die Technologie des "Constraint-Satisfaction" durchführbar. In Constraint-Satisfaction-Problemen (CSP) werden die Daten, die es gilt, konsistent zu machen, durch Variablen repräsentiert. Die Variablen haben eine diskrete Domäne, beispielsweise könnte die Variable "Farbe" die Domäne {rot-blau, grün-gelb} aufweisen. Die Konsistenzinformation wird durch Konsistenzbedingungen (constraints) zu diesen Variablen definiert. Diese Konsistenzbedingungen schränken die Wertekombination, welche die Variablen annehmen können, ein. Konsistenzbedingungen wie die folgenden können durch folgende Bedingungen repräsentiert werden: falls die Farbe meines Autos rot ist, dann muß das Hardtopdach schwarz sein.

Bei der Unterstützung von Mensch-Maschine-Interaktionen der Anwender muß das Problem als ein dynamisch generiertes Constraint-Satisfaction-Problem betrachtet werden. Diese Art von Problemen berücksichtigt nur solche Teile der Informationen, welche für die aktuelle Benutzer-Interaktion relevant sind.

Die Anwendung entsprechender Constraint-Satisfaction-Technologie zur Unterstützung von Anwendern bei der Katalogisierung von Datenobjekten ist bislang nicht beschrieben worden.

Es ist daher die Aufgabe der vorliegenden Erfindung, Mittel bereitzustellen, mit denen die Konsistenz von Datenobjektzuordnungen zu Kategorien mit vorgegebenen Regeln im Sinne einer Constraint-Satisfaction durchgeführt werden kann.

### Darstellung der Erfindung

Diese Aufgabe wird gelöst durch die Bereitstellung eines Kategorisierungssystems gemäß dem unabhängigen Patentanspruch 1 sowie das Verfahren gemäß dem unabhängigen Patentanspruch 11.

Weitere vorteilhafte Aspekte, Details und Ausgestaltungen der vorliegenden Erfindung ergeben sich aus den abhängigen Patentansprüchen, der Beschreibung und den beigefügten Zeichnungen.

Der Erfindung liegt das Prinzip zugrunde, nach oder mit jeder Zuordnung eines Datenobjekts zu einer Kategorie durch einen Benutzer die Konsistenz dieser Zuordnung mit vorgegebenen Regeln über solche Zuordnungen zu überprüfen.

Die Erfindung ist zunächst gerichtet auf ein Kategorisierungssystem zum kategorisierten Speichern von Datenobjekten, aufweisend:
- ein Interaktionsmittel zur Eingabe von Zuordnungen von Datenobjekten zu Kategorien;
- eine Datenbank, speichernd zumindest eine Konsistenzbedingungsregel zum Bestimmen von Konsequenzen bezüglich Zuordnungen von Datenobjekten zu Kategorien als Folge einer von einem Benutzer eingegebenen Zuordnung eines Datenobjekts zu einer Kategorie; und
- ein Konsistenzprüfmittel zur Prüfung der Konsistenz von eingegebenen Zuordnungen mit der zumindest einen Konsistenzbedingungsregel in der Datenbank.

Das gattungsgemäße Kategorisierungssystem dient, wie auch aus dem Stand der Technik bekannt, dem Erfassen und Speichern von Datenobjekten bzw. Verweisen auf diese Datenobjekte unter bestimmten Kategorien. Zentrales Element der erfindungsgemäßen Kategorisierungssystems sind eine oder mehrere Konsistenzbedingungsregeln. Diese korrelieren eine von einem Benutzer eingegebene Zuordnung eines Datenobjekts zu einer Kategorie mit daraus abzuleitenden Konsequenzen bezüglich weiterer Zuordnungen von Datenobjekten zu Kategorien.

Unter einer Konsequenz ist im Sinne der vorliegenden Erfindung eine Aussage über Zuordnungen zu verstehen, welche vorgenommen werden müssen, oder welche nicht vorgenommen werden dürfen, oder welche nur in bestimmten Kombinationen vorgenommen werden dürfen, oder in Kombination mit bestimmten Zuordnungen, jedoch nicht anderen Zuordnungen, wenn ein Benutzer eine Zuordnung eines Datenobjekts vorgenommen hat. Abstrakt formuliert, enthält eine erfindungsgemäß verwendete Konsistenzbedingungsregel eine Information über eine Zuordnung und aus dieser Zuordnung folgernde Konsequenzen.

Unter einer Kategorie ist im Sinne der vorliegenden Erfindung ebenfalls im weitesten Sinne ein Datenobjekt zu verstehen, welches in der Lage ist, Informationen über ihm zugeordnete Datenobjekte zu speichern und welches durch einen Begriff charakterisiert ist, der die Kategorie sachlich und für einen Anwender verständlich benennt.

Erfindungsgemäß sollen sich die Konsequenzen als Folge einer von einem Benutzer eingegebenen Zuordnung ergeben. Hierbei ist unter dem Begriff "als Folge" zu verstehen, daß die Konsequenzen sich daraus ergeben, daß der Benutzer im System eine Zuordnung eines Datenobjekts zu einer Kategorie eingegeben hat.

Das erfindungsgemäße Konsistenzprüfmittel dient der Prüfung der Konsistenz, das heißt der Übereinstimmung oder Nichtübereinstimmung von durch einen Benutzer eingegebenen Zuordnungen mit der Konsistenzbedingungsregel oder den Konsistenzbedingungsregeln. Anders gesagt, prüft das Konsistenzprüfmittel das Vorliegen der sich ergebenden Konsequenzen bezüglich einer Zuordnung.

Die verwendete Datenbank kann entweder eine speziell angepaßte Datenbank oder eine übliche und kommerziell erhältliche Datenbank sein, die in der Lage sein muß, die Informationen der Konsistenzbedingungsregeln hinsichtlich ihrer Syntax beziehungsweise ihres Formats aufzunehmen und zu speichern.

Das Interaktionsmittel schließlich dient der Eingabe von Informationen durch einen Anwender. Es kann sich hierbei erfindungsgemäß um ein Textterminal, eine Spracherkennungseingabebox oder um ein Darstellungsprogramm mit graphischer Benutzeroberfläche auf einer Datenverarbeitungsanlage oder andere bekannte Eingabemöglichkeiten handeln. Es muß hierbei lediglich gewährleistet sein, daß es möglich ist, Zuordnungen von Datenobjekten zu Kategorien vorzunehmen. Üblicherweise dient das Intaraktionsmittel auch zur Ausgabe von Daten bzw. ihrer Präsentation gegenüber dem Anwender.

Das erfindungsgemäße Kategorisierungssystem kann weiterhin aufweisen ein Regeldefinitionsmittel zur Definition und/oder Modifikation von Konsistenzbedingungsregeln unter Speicherung der definierten und/oder modifizierten Konsistenzbedingungsregel in der Datenbank.

Das Regeldefinitionsmittel wird in der Regel ebenfalls über ein Benutzerinterface oder eine Schnittstelle zum Interaktionsmittel verfügen, und wird einem Anwender gestatten, neue Konsistenzbedingungsregeln zu formulieren beziehungsweise existierende Konsistenzbedingungsregeln abzuändern oder zu löschen.

Da sich bei üblichen Katalogisierungen von Datenobjekten die Struktur der verwendeten Kategorien zumeist häufig ändert, sind permanent entsprechende Anpassungen der Konsistenzbedingungsregeln an die sich ändernden Gegebenheiten des gesamten Kategorisierungssystems notwendig. Zudem können neue Erkenntnisse oder veränderte Anforderungen an die Kategorisierung ebenfalls dazu führen, daß andere Konsistenzbedingungsregeln gewünscht sein können.

Die Datenobjekte können beliebige Informationsstücke sein, wie sie im Stand der Technik bekannt sind. Es kann sich beispielsweise um Dokumente, Bilder, Multimediadaten, Datenbankeinträge, Newsfeeder, oder auch um Verweise auf solche Objekte handeln. Auch beliebige andere Daten können als Datenobjekte einer Kategorisierung und der Konsistenzprüfung gemäß der Erfindung zugeführt werden.

Einen speziellen Fall von Datenobjekten stellt es dar, wenn ein Datenobjekt eine Unterkategorie zu einer anderen Kategorie ist. Auf diese Weise lassen sich Unterkategorien definieren und dem System zuordnen, wobei diese Unterkategorien ebenfalls der Konsistenzprüfung unterzogen werden. Durch die Verwendung von Unterkatagorien, die erfindungsgemäß ebenfalls als Datenobjekte zu verstehen sein sollen, lassen sich hierarchische Strukturen implementieren.

Es ist insbesondere bevorzugt, daß die Unterkategorien hierarchisch zueinander angeordnet sind, wobei zumindest eine Wurzelkategorie existiert. Unter einer Wurzelkategorie ist hierbei zu verstehen eine Kategorie, die nicht mehr die Unterkategorie anderer Kategorien ist. Ein Gesamtsystem kann allerdings auch mehrere oder gar keine Wurzelkategorien aufweisen.

Das weiter unten vorgestellte erfindungsgemäße Verfahren profitiert von der Existenz einer oder mehrerer Wurzelkategorien, da die notwendige Rechenleistung zur Lösung des gestellten Problems sinkt, wenn die durch die Interaktion mit dem Benutzer sowie von den Konsistenzbedingungsregeln betroffene hierarchische Struktur keine Zirkelzuordnung aufweist.

Das Interaktionsmittel, welches wie gesagt, ebenfalls ein Anzeigenprogramm sein kann, wird bevorzugterweise weiterhin zur Anzeige von Datenobjekten und ihrer Zuordnungen zu Kategorien dienen. Auf diese Weise kann der Anwender eine schnelle Übersicht über die vorgenommenen Zuordnungen und bereits existierenden Verhältnisse innerhalb des Pools von Datenobjekten gewinnen. Ein solches Interaktionsmittel kann neben einem Spezialprogramm oder den oben vorgestellten Hardware-basierten Lösungen ebenfalls ein übliches Darstellungsprogramm für in einer Seitenbeschreibungssprache abgefaßte Dokumente sein, beispielsweise ein HTML- oder XML-Browser, der in der Lage ist, die abgespeicherten Zuordnungen dem Anwender zu präsentieren. Zuordnungen sowie die Datenobjekte selbst oder Verweise auf diese können beispielsweise in derselben Datenbank gespeichert werden, welche auch die Konsistenzbedingungsregeln speichert.

Zur Formulierung beziehungsweise Formatierung der Konsistenzbedingungsregeln stehen dem Fachmann verschiedene, aus dem Stand der Technik, bekannte Möglichkeiten zur Verfügung. Als ein Beispiel sei eine Syntax vorgeschlagen, bei der die Konsistenzbedingungsregeln aufweisen zumindest zwei Variablen zur Beschreibung der Zuordnung eines Datenobjekt zu einer Kategorie sowie zumindest einen Vorschriftsoperator, der die Variablen miteinander verknüpft. Eine Variable kann also so aussehen, daß sie einen Vektor darstellt, der eine Kategorieinformation einerseits und eine Datenobjektinformation andererseits enthält. Der Vorschriftsoperator ist im Stile einer Wenn-Dann-Verknüpfung anzusehen, wobei z.B. auf einer Seite des Operators die Variable steht, welche eine von einem Benutzer vorgenommene Zuordnung repräsentiert, während auf der anderen Seite des Vorschriftsoperators zumindest eine oder auch mehrere weitere Variablen mit anderen Zuordnungen stehen. Durch den Vorschriftsoperator wird das Verhältnis der Variablen auf beiden Seiten des Vorschriftsoperators definiert.

Typische Vorschriftsoperatoren können beispielsweise sein, daß, wenn auf der einen Seite eine bestimmte Zuordnung vorhanden ist, auf der anderen Seite auch eine Zuordnung des jeweiligen Datenobjekts zu anderen, auf der anderen Seite spezifizierten Kategorien gegeben sein muß, vorgenommen werden.

Auch das Vermeiden bestimmter Kategorien kann durch einen entsprechenden Vorschriftsoperator festgelegt werden. Der Vorschriftsoperator kann auch Alternativen aufzeigen, von denen mindestens eine oder mehrere erfüllt sein müssen. Insgesamt sind alle möglichen vorstellbaren logischen Verknüpfungen zwischen den Variablen möglich.

Der Vorschriftsoperator muß sich nicht zwischen den Variablen befinden, sondern kann an beliebigen Stellen in einem angenommenen Textfluß vorhanden sein, wenn dies die verwendete Logiksyntax so vorsieht.

Das in der Variablen enthaltene Datenobjekt wird in aller Regel natürlich abstrakt beschrieben werden und nicht durch ein konkretes Datenobjekt. Hierbei kann innerhalb der Variablen einfach eine Platzhalterrolle vergeben werden, die mit einem beliebigen Datenobjekt im konkreten Anwendungsfall belegt wird. Es ist allerdings ebenfalls möglich, über die Definition der Variablen die Datenobjekte näher zu spezifizieren, z.B. mit Hilfe einer Filterfunktion. So ist es beispielsweise möglich, Datenobjekte nach dem verwendeten Datenformat, beziehungsweise der Art der Daten, aufzuschlüsseln. So können die angegebenen Variablen beispielsweise Datenojektinformationen dergestalt enthalten, ob es sich bei dem zugeordneten Datenobjekt um ein Textdokument, um eine Graphik, Multimediadaten etc. handelt.

Auf diese Weise ist es möglich, die Konsistenzbedingungsregeln noch besser anzupassen. So ist es vorstellbar, daß ein Datenobjekt, das ein Text ist, der einer bestimmten Kategorie zugeordnet worden ist, zugleich in einer zweiten Kategorie, beispielsweise unter Textdokumente erscheinen soll, während ein in derselben Kategorie zugeordnetes Datenobjekt, das eine Audiodatei ist, zugleich einer Kategorie "Musikstücke" zugeordnet werden soll.

Auch ist es möglich, innerhalb einer einzelnen Konsistenzbedingungsregel auf diese Weise mehr als einen Typus von Datenobjekten zu spezifizieren. So kann auf diese Weise durch die Zuordnung eines Datenobjekts zu einer bestimmten Kategorie eine Folge ausgelöst werden, bei der andere Datenobjekte, die gegebenenfalls sogar anderen Kategorien zugeordnet worden sind, beeinflußt werden.

So ist beispielsweise vorstellbar, daß immer dann, wenn ein PDF-Dokument, welches eine bestimmte Kennung, beispielsweise einen Dateinamen trägt, einer Kategorie zugeordnet wird, ein mit der gleichen Kennung versehenes HTML-Dokument, sofern es sich bereits in derselben Kategorie zugeordnet befindet, einer anderen Kategorie zugeordnet wird. Auf diese Weise kann erreicht werden, daß in bestimmten Kategorien höherwertig aufbereitete und damit informativere Datenobjekte einfachere (beispielsweise ohne Graphiken) auf Ausweichkategorien verdrängen, so daß bei bestimmten Schlüsselkategorien eine permanente Qualitätsverbesserung stattfinden kann.

Der konkreten Ausgestaltung der Syntax von Konsistenzbedingungsregeln sowie der konkreten Anwendung von Konsistenzbedingungsregeln für das erfindungsgemäße Kategorisierungssystem, beziehungsweise das unten noch vorzustellende Verfahren, sind hierbei praktisch keine Grenzen gesetzt.

Das Kategorisierungssystem kann vorzugsweise weiterhin Aktionsmittel zum Ausführen von Aktionen in Abhängigkeit vom Ergebnis der Prüfung aufweisen. Ein solches Aktionsmittel kann beispielsweise ein Ausgabeprogramm oder Programmmodul sein, welches den Benutzer darüber informiert, daß eine Inkonsistenz aufgetreten ist und gegebenenfalls, welche weitere Maßnahmen (Zuordnen des gerade zugeordneten Datenobjekts zu weiteren Kategorien, Löschen des Datenobjekts aus bestimmten Kategorien etc.) ausgeführt werden sollen.

Alternativ ist auch vorstellbar, daß das Aktionsmittel eine automatische Korrektur enthält, welche im Falle des Vorliegens einer Inkonsistenz diese an Hand der Ergebnisse der Prüfung automatisch korrigiert beispielsweise, indem ein Datenobjekt weiteren Kategorien zugewiesen wird, oder aus Kategorien entfernt wird, oder indem eine Fehlermeldung ausgegeben wird und eine Zuordnung verweigert wird (Priorität älterer Zuordnungen) oder auch, indem weitere Datenobjekte als Folge der Zuordnung automatisch manipuliert werden.

Es besteht die grundsätzliche Möglichkeit, die zum Kategorisierungssystem gehörigen Komponenten als eine Hardware-Schaltung zu implementieren. Auf Grund der höheren Flexibilität wird jedoch im allgemeinen bevorzugt werden, das Kategorisierungssystem mit Hilfe eines Computer-Programmprodukts abzubilden. Es wird daher bevorzugt, daß das Kategorisierungssystem ein Computerprogrammprodukt ist, dessen Bestandteile zumindest teilweise direkt in den Hauptspeicher einer digitalen Datenverarbeitungsanlage geladen werden können, und dessen Programmbestandteile von der Datenverarbeitungsanlage ausgeführt werden können.

Die Erfindung ist weiterhin auf ein Verfahren zum Prüfen der Konsistenz gerichtet, wobei alles bezüglich des Kategorisierungssystems Gesagte gleichermaßen für das Verfahren gilt, so daß auf das Kategorisierungssystem und seiner Erläuterungen oben Bezug genommen und vollinhaltlich verwiesen wird, ebenso wie bezüglich des Systems auf die folgende Beschreibung des Verfahrens verwiesen wird.

Die Erfindung ist daher weiterhin gerichtet auf ein Verfahren zum Prüfen der Konsistenz von Zuordnungen, die durch einen Benutzer vorgenommen worden sind, von Datenobjekten zu Kategorien mit Konsistenzbedingungsregeln zum Bestimmen von Konsequenzen bezüglich Zuordnungen von Datenobjekten zu Kategorien als Folge einer von einem Benutzer eingegebenen Zuordnung eines Datenobjekts zu einer Kategorie, wobei das Verfahren die folgenden Schritte aufweist:
- Feststellen einer von einem Benutzer vorgenommenen Zuordnung eines Datenobjekts zu einer Kategorie;
- Prüfen der Übereinstimmung oder Nichtübereinstimmung der vorgenommenen Zuordnung mit zumindest einer anzuwendenden Konsistenzbedingungsregel; und
- Ausführen einer Aktion in Abhängigkeit vom Ergebnis der Prüfung.

Die Konsistenzbedingungsregeln der Datenobjekte und Kategorien sind wie oben definiert. Auch hier ergeben sich Konsequenzen als Folge einer eingegebenen Zuordnung eines Datenobjekts zu einer Kategorie. Diese Konsequenzen, welche beispielsweise in weiteren Zuordnungen oder im Vermeiden anderer Zuordnungen bestehen können, werden durch die Konsistenzbedingungsregeln festgelegt.

Das Feststellen einer von einem Benutzer vorgenommenen Zuordnung ergibt sich dann selbstverständlich, wenn das verwendete Datenverarbeitungssystem mit integralen Bestandteilen zur Durchführung des Verfahrens versehen ist. So ist es möglich, beim Aktivieren einer Zuordnung eine Unterprogrammfunktion aufzurufen, welche dann die Prüfung vornimmt. In diesem Fall erfolgt bereits durch das Akzeptieren der Eingabe das Feststellen der vorgenommenen Zuordnung.

Wenn dieses Programm separat vom eigentlichen Zuordnungssystem und der Datenbank implementiert werden soll, ist es notwendig eine Art von Lauschfunktion zu implementieren, welche beispielsweise in die Nachrichten-Queue des Zuordnungssystems eingreift und erkennt, wann Zuordnungen vorgenommen worden sind.

Das Prüfen der Übereinstimmung oder Nichtübereinstimmung, also das Feststellen, ob die anzunehmenden Konsequenzen vorliegen, stellt den Kern des Verfahrens dar und wird üblicherweise durch einen Constraint-Satisfaction-Ansatz gelöst werden.

Wie bereits oben erläutert, kann das Nichtübereinstimmen darin bestehen, daß weitere Zuordnungen des Datenobjekts zu Kategorien vorgenommen werden müssen (das heißt, daß die Konsequenz der Zuordnung darin bestand, daß bestimmte weitere Zuordnungen vorliegen müssen) und/oder daß zumindest zwei Zuordnungen des Datenobjekts zu Kategorien vorgenommen worden sind, die nicht gleichzeitig vorkommen dürfen (die Konsequenz der Zuordnung eines Datenobjekts besteht also darin, daß es nicht eine bestimmte andere Zuordnung geben darf).

Der erfindungsgemäßen Verfahrensschritt des Prüfens des Übereinstimmens oder Nichtübereinstimmens kann wiederum folgende Schritte aufweisen:
- Erfassen der bezüglich vom Benutzer vorgenommenen Zuordnung relevanten Datenobjekte, Kategorien und Zuordnungen;
- Formulierung eines Constraint-Satisfaction-Problems unter Verwendung der zumindest einen anzuwendenden Konsistenzbedingungsregel, wobei Kategorien und Unterkategorien dieser Kategorien als Variablen verwendet werden und den Kategorien und/oder Unterkategorien zugeordnete Unterkategorien und/oder Datenobjekte als Domäne der Kategorien beziehungsweise Unterkategorien verwendet werden; und
- Lösen des Constraint-Satisfaction-Problems mit einem geeigneten Algorithmus.

Hierbei können verschiedene aus dem Stand der Technik auch bekannte Algorithmen zur Lösung von Constraint-Satisfaction-Problemen zum Einsatz gebracht werden. Beispiele für solche Algorithmen sind der Backtracking-Algorithmus, wobei verschiedene Verfeinerungen, beispielsweise nach Freuder (J. ACM 29, S. 24-32, 1982), Mackworth (Artificial Intelligence 8, S. 99-118, 1977) und Mackworth und Freuder (Artificial Intelligence 59, S. 57-92, 1993) eingeführt werden können.

Der im erfindungsgemäßen Verfahren enthaltene Schritt des Ausführens einer Aktion kann in einer Benachrichtigung des Benutzers im Falle einer Nichtübereinstimmung bestehen oder auch, wie bereits oben ausgeführt, in einem automatischen Korrigieren der geprüften Zuordnung im Falle einer Nichtübereinstimmung.

### Kurze Beschreibung der Zeichnungen

Im folgenden soll die Erfindung an Hand konkretisierter Ausführungsbeispiele und weiterer Hintergrunderläuterungen näher beschrieben werden, wobei auf die beigefügten Zeichnungen Bezug genommen werden wird, in denen folgendes dargestellt ist:
Figur 1 zeigt eine Ausführungsform des erfindungsgemäßen Kategorisierungssystems.
Figur 2 zeigt eine Beispiel-Datenstruktur mit Zuordnungen von Datenobjekten zu Kategorien; und

### Wege zur Ausführung der Erfindung

Die vorliegende Erfindung schlägt ein System vor, welches Benutzer bei der Klassifizierung von Dokumenten in einer Datenbank oder einer WWW-Anwendung, wie beispielsweise einem Portal, unterstützten kann. Das erfindungsgemäße System analysiert automatisch Anwenderinteraktionen innerhalb der Programmapplikation und verwendet vorgegebene Konsistenzbedingungen, um die Konsistenz dieser Benutzeraktionen mit der gegebenen Informationsklassifizierung zu überprüfen.

Beim Vorliegen eines Sets von Konsistenzbedingungen einer existierenden Klassifikationshierarchie und einer Anwenderinteraktion wird ein Constraint-Satisfaction-Problem (CSP) dynamisch als Hintergrundprozeß erzeugt, und Konsistenzprüfungsalgorithmen werden auf das Problem angewandt, um Inkonsistenten zwischen Dateneingabe und bereits in der Applikation existierender Information (oder der Informationstruktur) aufzufinden. Solche Inkonsistenzen können entweder automatisch korrigiert oder dem Benutzer angezeigt werden, beispielsweise in einem separaten Fenster auf einem Bildschirmarbeitsplatz. Falls der Anwender die Inkonsistenz durch weitere Interaktionen während derselben Sitzung beseitigt, wird die Inkonsistenzinformation, beispielsweise die in dem Fenster dargestellte Information, automatisch aktualisiert. Vorstellbar ist hierbei beispielsweise auch eine graphische Darstellung, bei der die gegebenenfalls hierarchische Informationsstruktur der verwendeten Datenbasis in einem Fenster ebenfalls graphisch dargestellt wird, wobei aufgetretene Inkonsistenzen innerhalb dieser Hierarchie durch Farbmarkierung hervorgehoben werden können. Vorstellbar ist ebenfalls, eine Liste mit aufgetretenen Inkonsistenzen anzuzeigen.

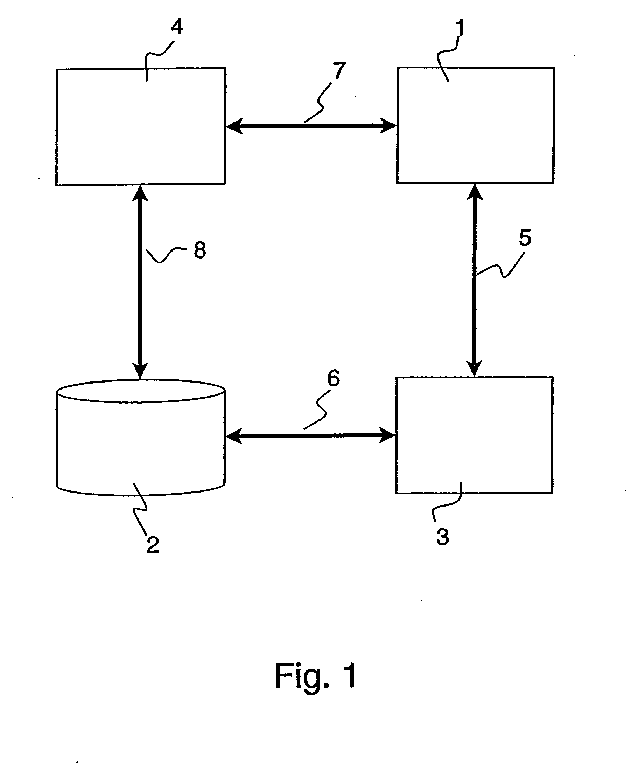

Figur 1 zeigt in Diagrammform eine typische Anordnung eines Datenverwaltungssystems, beziehungsweise einer Datenbank, mit Datenobjekten und Kategorien, welche im Sinne der vorliegenden Erfindung als Spezialfall von Datenobjekten betrachtet werden sollen.

Die Kategorien werden als Knoten 11 in der Graphik repräsentiert, wobei eine Wurzelkategorie 10 als gemeinsamer Bezugspunkt aller anderen Kategorien dient. Bei Verwendung eines Web-Browsers oder eines ähnlichen Anzeigeprogramms kann jede der Kategorien durch ihre eigene Seite in der anzeigenden Anwendung repräsentiert werden. Beispielsweise kann in einer Seite der Name der Kategorie oder eine sonstige Designation sowie Verknüpfungen auf alle Dokumente angezeigt werden, die der Kategorie zugeordnet sind.

Jede Kategorie (Unterkategorie) kann 0 bis n Eltern-Kategorien aufweisen. Nur die Wurzelkategorie 10 verfügt nicht über ein Elter. Die Kategorienhierarchie kann als ein gerichteter Constraint-Graph dargestellt werden, wobei die Knoten 10, 11 die Kategorien repräsentieren und Informationsobjekte 12, 13, 14 ebenfalls als Knoten dargestellt werden, und die vorgenommene Zuordnungen 15, 16 die Eltern-Kind-Beziehung repräsentieren. In einem syntaktischen Ansatz kann beispielsweise Parent(cat, doc) anzeigen, daß das Datenobjekt doc der Kategorie cat zugeordnet ist. Parent(cat1, cat2) zeigt an, daß cat2 eine Unterkategorie von cat1 ist.

Jede der Kategorien kann 0 bis n-Datenobjekte haben, die ihr zugeordnet sind. Datenobjekte können Bilder, Filmdokumente, Sprachdokumente, Textdokumente, Newsfeeds, Verknüpfungen zu anderen Informationsthemen, Verknüpfungen auf Webseiten etc. sein, aber auch im Sinne der vorliegenden Erfindung Unterkategorien zu einer Kategorie. Eine Kategorie beschreibt die ihr zugeordneten Datenobjekte als Sammelbegriff. Beispielsweise werden in gängigen Informationsstrukturen Kategorien wie "Windows", "Linux" oder "MacOSX" unter "Betriebssysteme" als Unterkategorien verwendet. Die Kategorie "Betriebssystem" ist also ein Sammelbegriff, der die Begriffe "Windows", "Linux" und "MacOSX" auf einer abstrakteren Ebene zusammenfasst und beschreibt.

Wenn Anwender eine interaktive Sitzung am System starten, werden sie durch das System identifiziert. Alle Interaktionen eines Anwenders mit dem System während dieser Sitzung, wie beispielsweise Klicken auf eine Kategorie, um ihren Inhalt zu sehen, können aufgezeichnet werden.

Die Datenobjekte 12, 13, 14 und Kategorien 10, 11, wie auch die Zuordnungen 15, 16 zwischen ihnen, werden in einer relationalen oder sonstigen Datenbank, beispielsweise einer objektorientierten Datenbank gespeichert.

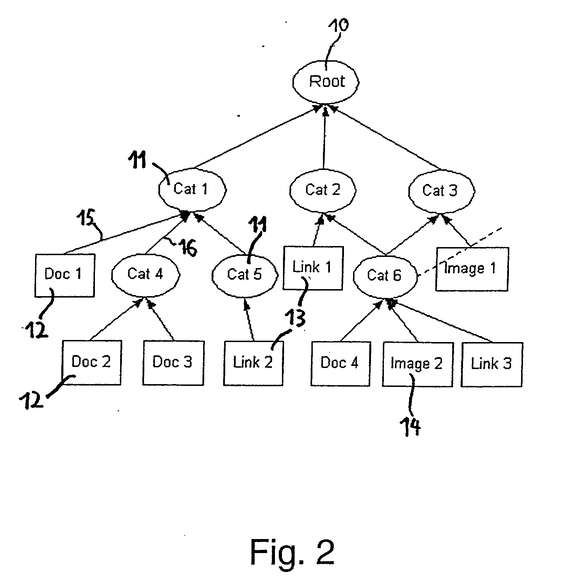

Es kann zudem unterschieden werden zwischen Zuordnungen von eigentlichen Datenobjekten, also Dokumentenbildern etc. zu Kategorien, was im Graph der Figur 2 durch Zuordnung 15 dargestellt wird, sowie von Datenobjekten, die Unterkategorien sind zu Kategorien 11, wobei die Zuordnung durch Zuordnungen 16 erfolgt.

Figur 2 zeigt das erfindungsgemäße Kategorisierungssystem mit seinen Komponenten in einer schematischen Übersicht. Das System besteht aus folgenden Bestandteilen:
1. einem Interaktionsmittel 1, beispielsweise einem Web-Browser oder einem XML-Browser;
2. einer Datenbank 2, welche die Konsistenzbedingungsregeln speichert aber auch Kategorien, Datenobjekte und Zuordnung zwischen ihnen aufnehmen kann;
3. einem Konsistenzprüfmittel 3 (consistency agent), welcher die Konsistenzprüfung während einer Sitzung durchführt und der über eine Verbindung 5 mit dem Interaktionsmittel 1 verbunden ist, über den die Interaktionen des Benutzers an das Konsistenzprüfmittel 3 weitergeleitet werden und Informationen über Inkonsistenzen oder Konsistenzen an das Interaktionsmittel 1 zur Anzeige geleitet werden.

Über Verbindung 6 zwischen Datenbank 2 und Konsistenzprüfmittel 3 kann das Konsistenzprüfmittel die existierenden Kategorien und die Konsistenzbedingungsregeln nach Bedarf laden, um ein Constraint-Satisfaction-Problem zu formulieren und zu lösen. Optional kann ein Regeldefinitionsmodul 4 vorgesehen sein, welches Anwendern erlaubt, über eine Verbindung 7 neue Konsistenzbedingungsregeln zu definieren, beziehungsweise existierende zu modifizieren. Über eine Verbindung 8 steht das Regeldefinitionsmodul 4 mit der Datenbank 2 in Verbindung, um existierende Kategorien zu laden oder neue, beziehungsweise modifizierte Konsistenzbedingungsregeln zu speichern.

Das Regeldefinitionsmodul erlaubt Anwendern, Konsistenzbedingungsregeln durch das Interaktionsmittel, beispielsweise einen Web-Browser, zu spezifizieren. Regeln können formuliert werden, indem Kategorien selektiert werden aus dem Satz existierender Kategorien und indem sie mit Vorschriftsoperatoren, wie
AND, OR, =>, >=, und ⇔
und durch die Verknüpfungen Parent oder Successor verbunden werden. So kann bei dieser speziellen Ausführungsform einer entsprechenden Regelsyntax die folgende Regel Parent(cat1, x) ⇔ (parent(cat2,x) OR parent(cat3,x) OR parent(cat4,x)
wie folgt interpretiert werden:
Jedes Datenobjekt x in cat1 muß auch gefunden werden in cat2 oder cat3 oder cat4 und vice versa muß ein Datenobjekt x, das cat2 zugeordnet ist oder cat3 oder cat4, auch cat1 zugeordnet sein. Diese und andere Regeln, die ein Benutzer aufstellen kann, werden in diesem Format in der Datenbank gespeichert.

Der vom Konsistenzprüfmittel ("consistency agent") durchgeführte Algorithmus zur Inkraftsetzung einer Konsistenz zwischen Variablen, beispielsweise der von A.K. Mackworth und E.C. Freuder vorgestellte (Artificial Intelligence, 25, Seiten 65 bis 74, 1984) kann verwendet werden, um Konsistenz zwischen Kategorien und Datenobjekten, die diesen Kategorien zugeordnet sind, aufrechtzuerhalten.

Ein Constraint-Sasisfaction-Problem, welches mit einem entsprechenden Algorithmus gelöst werden kann, besteht aus einer Menge von Variablen, deren Wertebereiche, und einer Menge von "Constraints" (Bedingungen bzw. Nebenbedingungen), die auf den Variablen definiert sind. Das Ziel ist es, jeder Variable einen Wert zuzuordnen, so daß alle "Constraints" erfüllt sind. Die Kategorienhierarchie kann beispielsweise durch einen gerichteten Constraint-Graphen repräsentiert werden, in dem die Knoten Kategorien oder Informationsbeziehungsweise Datenobjekte repräsentieren und die gerichteten Verknüpfungen die Zuordnungen zu einem Elterteil. So ist beispielsweise in Figur 2 cat2 ein Elter von cat6, das heißt parent(cat2, cat6). Eine typische Konsistenzbedingung, welche auf diesem Graphen erzwungen werden kann, ist beispielsweise "falls eine Kategorie zu Kategorie 2 gehört, muß sie auch zu Kategorie 3 gehören und vice versa" oder formal ausgedrückt catagory(x): parent(cat2x) ⇔ parent (cat3, x).

Das Konsistenzprüfmittel, beziehungsweise der mit ihm verknüpfte Algorithmus kann beispielsweise und vorzugsweise folgende Schritte durchführen:
1. Aufnehmen der aktuellen Benutzerinteraktion, beispielsweise Hinzufügen oder Löschen einer Subkategorie von einer Kategorie oder Verschiebung einer Kategorie zu einer anderen Kategorie.
2. Auswahl des Teils des Constraint-Graphen, der für die aktuellen Benutzerinteraktion relevant ist und Registrieren aller Knoten und Beziehungen zwischen Knoten und Formulieren dieser Beziehungen als Constraint-Satisfaction-Problem.
   Bezüglich des oben angegebenen Beispiels heißt dies, daß alle Kinder von cat2 registriert werden und unter Verwendung der Konsistenzbedingungen parent(cat,2x) ⇔ parent(cat3, x); Registrieren aller der cat3 zugeordneten Knoten. Falls die Relation Successor (cat, x) verwendet wird, Sammeln aller Successor-Knoten der Kategorie cat. Das Constraint-Satisfaction-Problem wird formuliert, indem die Knoten als Variablen, und die ihnen zugeordneten Kindknoten (Unterkategorien und Datenobjekte) als die Domäne dieser Variablen betrachtet werden. So gilt beispielsweise
   cat2 mit Domäne {cat6}.
   cat3 mit Domäne {cat6}.
   Die Konsistenzbedingung wird ausgedrückt als domain(cat2) = domain(cat3).
3. Durchführen der Auflösung unter Verwendung eines Constraint-Satisfaction-Algorithmus. Falls der Konsistenzbedingungsgraph ein Baum ist, so sichert Bogenkonsistenz, daß es eine Lösung gibt. Andernfalls muß eine Lösung durch Verwendung von Backtracking berechnet werden.
4. Informieren des Anwenders über den Status des Konsistenz in einem speziellen Fenster oder dem allgemeinen Interaktionsmittel. Falls eine Inkonsistenz gefunden wurde, Angeben der Konsistenzbedingungen bezüglich der die Konsistenzprüfung scheiterte.

Ein einfacher aber als oben erwähnter Algorithmus zur Bestimmung einer Lösung für das Constraint-Satisfaction-Problem ist der sogenannte Suchalgorithmus (Haralick und Elliott, Artificial Intelligence, 14, S. 263-313, 1980). Hier werden die Variablen nach einer vorgegebenen Heuristik ausgewählt und es wird geprüft, ob die Partiallösung noch gültig ist. Falls ja, wird die nächste Variable ausgewählt, falls nein, wird die letzte Auswahl rückgängig gemacht, und es wird eine neue Variable ausgewählt.

Wenn der Suchprozeß in einer Sackgasse mündet, oder bei Anwenden der Baumsuche ein weiteres Untersuchen des aktuellen Asts nur zu einer schlechteren Lösung führen würde, ist ein Rückschreiten, der sogenannte Backtracking-Schritt notwendig. Durch Anwendung von statistischen Verfahren zur Auswahl von Variablen und Werten kann es zum sogenannten Trashing kommen, bei dem das Suchverfahren sehr oft zu dem gleichen schlechten Ast zurückkehrt.

Eine Bedingung, die eine Suche ohne Backtrack-Schritte garantiert, stellt Freuder (1982) vor. Sie basiert auf strenger k-Konsistenz und der Berechnung von minimalen Wegen in dem Constraint-Graphen. Der Autor gibt jedoch an, daß der Rechenaufwand selbst bei kleinen Problemen sehr hoch ist.

Die Einschränkung der Wertebereiche ist Gegenstand der Arbeiten von Mackworth (1977) und Mackworth und Freuder, (1993). Hier werden Eigenschaften der einzuplanenden Aktivitäten ausgenutzt, um ungültige Lösungen a priori durch Einschränkung des Wertebereichs und damit des Suchraums zu vermeiden. Diese Algorithmen dienen der Konsistenzprüfung und damit der Möglichkeit, den Suchraum einzuschränken.

Die Methode der Constraint-Propagierung, ein Verfahren zur Herstellung von lokaler Konsistenz, wird oft benutzt, um eine Vorverarbeitung eines Constraint-Netzes vorzunehmen. Sie ist sehr einfach und schränkt den Suchraum in vielen praktischen Fällen bereits stark ein.

Der Algorithmus zur Constraint-Propagierung heißt Forward Checking (Haralick und Elliot, 1980) und funktioniert wie folgt:

Forward Checking ergänzt die Baumtiefensuche um eine Komponente zur vorausschauenden Auswertung. Sobald eine Variable ausgewählt ist und ihr ein Wert zugewiesen wurde, werden an Hand zu dieser Variablen inzidenten Constraints (Konsistenzbedingungen) alle Werte aus den Wertebereichen der noch freien Variablen eliminiert, die inkompatibel mit dem aktuell gewählten Wert sind. Dies führt dazu, daß die Wertebereiche der Variablen bereits vor ihrer Festlegung reduziert werden und damit der Suchraum dramatisch verkleinert wird. Darüber hinaus kann es vorkommen, daß durch das Forward Checking der Wertebereich einer noch uninstantiierten Variablen leer wird. Das bedeutet, daß bereits früh festgestellt werden kann, daß zu einem späteren Zeitpunkt der Suche keine Lösung mehr gefunden werden kann, weil für eine Variable kein passender Wert mehr existiert. In dieser Situation kann sofort ein Backtracking ausgelöst werden. Das Prinzip des Forward Checking ist in Haralick & Shapiro (IEEE Transactions on Patent Analysis and Machine Intelligence, Seite 173, 1979) beschrieben.

Das erfindungsgemäße Kategorisierungssystem, beziehungsweise das zugeordnete Verfahren, würden typischerweise in Portalanwendungen verwendet, die beim Sammeln von Wissen und dem zur Verfügungstellen des Wissens für unterschiedliche Parteien eingesetzt werden. Das Ziel eines Wissensportals ist, daß viele verschiedene verteilte Teilnehmer sie verwenden, um die bereitgestellte Information zu lesen und neue Informationen hinzuzufügen. Ein Portal muß sicherstellen, daß Informationen einfach gefunden werden können, beispielsweise durch Bereitstellen eines guten Verfahrens zur Informationskategorisierung im Portal. Es ist daher wichtig, die Anwender zu unterstützen, indem ihnen interaktiv Vorschläge zur Klassifizierung der Information, welche sie dem System eingeben, gemacht werden.

Das erfindungsgemäße Kategorisierungssystem hat die folgenden Vorteile:
1. Information, die korrekt klassifiziert ist, wird durch andere Anwender leichter gefunden und gelesen oder in anderer Weise perzipiert. Die Motivation anderer, das Portal als wichtige Informationsquelle zu nutzen, steigt.
2. Anwender, welche neue Informationen bereitstellen, werden während dieser Aktivität unterstützt. Die Interaktion mit dem Portal braucht weniger Zeit und die Motivation, Information zu verfassen, steigt.
3. Die Gesamtqualität der Informationen in dem Portal steigt.
4. Weiterhin benötigen Angestellte, deren Aufgabe darin besteht, qualitativ hochwertige Informationen in dem Portal zu warten, weniger Zeit für diese Aufgabe, da die Information bereits gut kategorisiert ist.

### Bezugszeichenliste

- 1: Interaktionsmittel
- 2: Datenbank
- 3: Konsistenzprüfmittel
- 4: Regeldefinitionsmodul
- 5: Verbindung Interaktionsmittel/Konsistenzprüfmittel
- 6: Verbindung Konsistenzprüfmittel/Datenbank
- 7: Verbindung Interaktionsmittel/Regeldefinitionsmodul
- 8: Verbindung Regeldefinitionsmodul/Datenbank
- 10: Wurzelkategorie
- 11: Kategorie
- 12: Datenobjekt (Dokument)
- 13: Datenobjekt (Bild)
- 14: Datenobjekt (Verknüpfung)
- 15: Zuordnung Datenobjekt/Kategorie
- 16: Zuordnung Kategorie/Kategorie

## Patentansprüche

1. Kategorisierungsssystem; aufweisend:
ein Interaktionsmittel (1) zur Eingabe von Zuordnungen von Datenobjekten (11, 12, 13, 14) zu Kategorien (10, 11);
eine Datenbank (2), speichernd zumindest eine Konsistenzbedingungsregel zum Bestimmen von Konsequenzen bezüglich Zuordnungen von Datenobjekten (12, 13, 14) zu Kategorien (10, 11) als Folge einer von einem Benutzer eingegebenen Zuordnung eines Datenobjekts (12, 13, 14) zu einer Kategorie (10, 11); und
ein Konsistenzprüfmittel (3) zur Prüfung der Konsistenz von eingegebenen Zuordnungen mit der zumindest einen Konsistenzbedingungsregel in der Datenbank (2).

2. Kategorisierungsssystem nach Anspruch 1, **dadurch gekennzeichnet, daß** es weiterhin aufweist ein Regeldefinitionsmittel (4) zur Definition, Modifikation und/oder zum Löschen von Konsistenzbedingungsregeln und zur Speicherung der definierten und/oder modifizierten Konsistenzbedingungsregeln in der Datenbank (2).

3. Kategorisierungsssystem nach Anspruch 1 oder 2, **dadurch gekennzeichnet, daß** die Datenobjekte (12, 13, 14) Dokumente (12), Bilder (14), Multimediadaten, Datenbankeinträge, News-Feeder oder Verweise (13) auf solche Objekte sind.

4. Kategorisierungssystem nach einem der Ansprüche 1 bis 3, **dadurch gekennzeichnet, daß** zumindest ein Datenobjekt (11) eine Unterkategorie (11) zu einer anderen Kategorie (10, 11) ist.

5. Kategorisierungssystem nach Anspruch 4, **dadurch gekennzeichnet, daß** die Unterkategorien (10, 11) hierarchisch zueinander angeordnet sind, wobei zumindest eine Wurzelkategorie (10) existiert.

6. Kategorisierungssystem nach einem der Ansprüche 1 bis 5, **dadurch gekennzeichnet, daß** das Interaktionsmittel (1) weiterhin zur Anzeige von Datenobjekten (11, 12, 13, 14) und ihrer Zuordnungen (15, 16) zu Kategorien (10, 11) dient.

7. Kategorisierungssystem nach einem der Ansprüche 1 bis 6, **dadurch gekennzeichnet, daß** die Datenbank (2) zugleich zur Speicherung von Datenobjekten (11, 12, 13, 14) und ihrer Zuordnungen (15, 16) dient.

8. Kategorisierungssystem nach einem der Ansprüche 1 bis 7, **dadurch gekennzeichnet, daß** die Konsistenzbedingungsregeln aufweisen zumindest zwei Variablen zur Beschreibung der Zuordnung eines Datenobjekts (11, 12, 13, 14) zu einer Kategorie (10, 11) sowie zumindest einen Vorschrifts-Operator, der die Variablen miteinander verknüpft.

9. Kategorisierungssystem nach einem der Ansprüche 1 bis 8, **dadurch gekennzeichnet, daß** es weiterhin aufweist Aktionsmittel zum Ausführen von Aktionen in Abhängigkeit vom Ergebnis der Prüfung.

10. Kategorisierungssystem nach einem der Ansprüche 1 bis 10, **dadurch gekennzeichnet, daß** es ein Computerprogrammprodukt ist, dessen Bestandteile zumindest teilweise direkt in den Hauptspeicher einer digitalen Datenverarbeitungsanlage geladen werden können und dessen Programmbestandteile von der Datenverarbeitungsanlage ausgeführt werden können.

11. Verfahren zum Prüfen der Konsistenz von Zuordnungen, die durch einen Benutzer vorgenommen worden sind, von Datenobjekten (11, 12, 13, 14) zu Kategorien (10, 11), mit Konsistenzbedingungsregeln zum Bestimmen von Konsequenzen bezüglich Zuordnungen (15, 16) von Datenobjekten (11, 12, 13, 14) zu Kategorien (10, 11) als Folge einer von einem Benutzer eingegebenen Zuordnung (15, 16) eines Datenobjekts (11, 12, 13, 14) zu einer Kategorie (10, 11), folgende Schritte aufweisend:
- Feststellen einer von einem Benutzer vorgenommenen Zuordnung (15, 16) eines Datenobjekts (11, 12, 13, 14) zu einer Kategorie (10, 11);
- Prüfen der Übereinstimmung oder Nichtübereinstimmung der vorgenommenen Zuordnung (15, 16) mit zumindest einer anzuwendenden Konsistenzbedingungsregel; und
- Ausführen einer Aktion in Abhängigkeit vom Ergebnis der Prüfung.

12. Verfahren nach Anspruch 11, **dadurch gekennzeichnet, daß** das Nichtübereinstimmen darin bestehen kann, daß weitere Zuordnungen (15, 16) des Datenobjekts (11, 12, 13, 14) zu Kategorien (10, 11) vorgenommen werden müssen und/oder daß zumindest zwei Zuordnungen (15, 16) des Datenobjekts (11, 12, 13, 14) zu Kategorien (10, 11) vorgenommen worden sind, die nicht gleichzeitig vorkommen dürfen.

13. Verfahren nach Anspruch 11 oder 12, **dadurch gekennzeichnet, daß** das Prüfen des Übereinstimmens oder Nichtübereinstimmens folgende Schritte aufweist:
- Erfassen der bezüglich der vom Benutzer vorgenommenen Zuordnung relevanten Datenobjekte (11, 12, 13, 14), Kategorien (10, 11) und Zuordnungen (15, 16);
- Formulieren eines Constraint-Satisfaction-Problems unter Verwendung der zumindest einen anzuwendenden Konsistenzbedingungsregel, wobei Kategorien (10, 11) und Unterkategorien (11) dieser Kategorien (10, 11) als Variablen verwendet werden und den Kategorien (10, 11) und/oder Unterkategorien (11) zugeordnete Unterkategorien (11) und/oder Datenobjekte (12, 13, 14) als Domäne der Kategorien (10, 11) bzw. Unterkategorien (11) verwendet werden; und
- Lösen des Constraint-Satisfaction-Problems mit einem geeigneten Algorithmus.

14. Verfahren nach einem der Ansprüche 11 bis 13, **dadurch gekennzeichnet, daß** die ausgeführte Aktion eine Benachrichtigung des Benutzers im Falle einer Nichtübereinstimmung ist.

15. Verfahren nach einem der Ansprüche 10 bis 13, **dadurch gekennzeichnet, daß** die ausgeführte Aktion ein automatisches Korrigieren der geprüften Zuordnung (15, 16) im Falle einer Nichtübereinstimmung ist.
